# EUROPÄISCHE PATENTSCHRIFT

(11) **EP 1 804 990 B1**
(45) Veröffentlichungstag und Bekanntmachung des Hinweises auf die Patenterteilung: **29.04.2009**
(21) Anmeldenummer: 04790825.6
(22) Anmeldetag: 25.10.2004
(51) Int. Cl.: B23P 11/02, H05B 6/14

(54) **VORRICHTUNG ZUM INDUKTIVEN ERWÄRMEN EINES WERKZEUGHALTERS**
DEVICE FOR INDUCTIVELY HEATING A TOOL HOLDER
DISPOSITIF DE CHAUFFAGE INDUCTIF D'UN PORTE-OUTIL

(43) Veröffentlichungstag der Anmeldung: 11.07.2007
(73) Patentinhaber: Franz Haimer Maschinenbau KG, 86568 Hollenbach-Igenhausen (DE)
(72) Erfinder: HAIMER, Franz, 86568 Igenhausen (DE); HAIMER, Josef, 86568 Igenhausen (DE)
(74) Vertreter: Liska, Horst
(86) Internationale Anmeldenummer: PCT/EP2004/012039
(87) Internationale Veröffentlichungsnummer: WO 2006/045328

(56) Entgegenhaltungen:
- WO-A-03/099534
- DE-A1- 10 102 710
- DE-A1- 10 348 880
- DE-U1- 20 215 524
- US-B1- 6 712 367

## Beschreibung

Die Erfindung betrifft eine Vorrichtung gemäß dem Oberbegriff des Anspruchs 1, zum induktiven Erwärmen eines eine zentrische Aufnahmeöffnung für einen Schaft eines Rotationswerkzeugs, beispielsweise eines Bohrers oder Fräsers oder Reibwerkzeugs enthaltenden Hülsenabschnitts eines Werkzeughalters, der den in der Aufnahmeöffnung sitzenden Schaft des Werkzeugs im Presssitz hält und bei Erwärmung freigibt. Eine solche Vorrichtung ist aus der DE-A-101 02 710 bekannt.

Insbesondere für mit hoher Drehzahl rotierende Werkzeuge ist es bekannt, deren Schaft in einen Hülsenabschnitt eines Werkzeughalters einzuschrumpfen. Der Hülsenabschnitt wird hierzu beispielsweise mittels einer ihn umschließenden Induktionsspule erwärmt, so dass der Werkzeugschaft in die sich damit wärmedehnende, d.h. vergrößernde Aufnahmeöffnung des Hülsenabschnitts eingesteckt werden kann. Der Außendurchmesser des Werkzeugschafts ist etwas größer als der Nenndurchmesser der Aufnahmeöffnung, so dass das Werkzeug nach dem Abkühlen des Hülsenabschnitts im Presssitz drehfest in dem Werkzeughalter gehalten ist.

Hierfür geeignete induktive Heizvorrichtungen sind beispielsweise aus DE 101 02 710 A1 und DE 101 57 432 A1 bekannt. Diese Vorrichtungen haben eine auf den Hülsenabschnitt des Werkzeughalters aufsetzbare und ihn hierbei mit radialem Abstand ringförmig umschließende Induktionsspule, die aus einem Generator mit elektrischem Wechselstrom gespeist wird. Das Magnetfeld der Induktionsspule induziert in dem elektrisch leitenden, zum eist auch magnetisierbarem Material des Werkzeughalters Induktionsströme, die den Hülsenabschnitt unmittelbar erwärmen. Die Induktionsspule erstreckt sich axial zumindest über die Eingriffslänge, mit der der Werkzeugschafts in die Aufnahmeöffnung eintaucht und schließt mit ihrer Wicklung etwa im Bereich des werkzeugseitigen Stirnendes des Hülsenabschnitts axial mit diesem ab. In radialer Richtung verläuft der Innenumfang der Induktionsspule im Abstand zum Hülsenabschnitt, um ein und dieselbe Induktionsspule bei Werkzeughaltern mit unterschiedlichem Außendurchmesser des Hülsenabschnitts nutzen zu können.

An ihren Stirnseiten und an ihrem Außenumfang ist die Wicklung der Induktionsspule mit einer Flusskonzentratoranordnung aus einem magnetisierbaren, d.h. ferromagnetischem oder ferrimagnetischem Material ummantelt, dessen, bezogen auf Luft hohe magnetische Leitfähigkeit den magnetischen Fluss im Wesentlichen auf diesen Mantel konzentriert. Das magnetisierbare Material der Flusskonzentratoranordnung ist elektrisch nicht leitend, um zu verhindern, dass sich auch der Flusskonzentratormantel induktiv erwärmt. Der dem werkzeugseitigen Ende des Hülsenabschnitts benachbarte Bereich des Flusskonzentratormantels ist als Ringelement ausgebildet, welches unmittelbar auf dem werkzeugseitigen Stirnende des Hülsenabschnitts axial aufliegt. Bei dem Ringelement kann es sich beispielsweise um einen Abschirmkragen handeln, wie er in DE 101 02 710 A1 beschrieben ist oder aber um eine Ringscheibe, die sich radial über die Stirnfläche der Wicklung der Induktionsspule hinweg nach Art eines Polschuhs bis zum Außenumfang der Induktionsspule hin erstreckt, wie dies beispielsweise in DE 101 57 432 A1 beschrieben ist.

Bei herkömmlichen Induktionsvorrichtungen liegt der aus magnetisierbarem Material bestehende Flusskonzentratormantel zur Vermeidung von Luftspalten, die den magnetischen Widerstand des Magnetflusskreises erhöhen, unmittelbar am Stirnende des Hülsenabschnitts der Werkzeughalters auf. Da sich der Hülsenabschnitt beim Ein- und Ausschrumpfen des Werkzeughalters auf mehrere 100°C erwärmt, kann es im Dauerbetrieb herkömmlicher Vorrichtungen zu Schäden an dem relativ empfindlichen magnetisierbaren Material des Flusskonzentratormantels kommen.

Insbesondere um das Rotationswerkzeug aus dem Werkzeughalter problemlos ausspannen zu können, kommt es darauf an, dass der Hülsenabschnitt über seine axiale Länge hinreichend erwärmt wird. Es hat sich gezeigt, dass der bei herkömmlichen Induktionsvorrichtungen unmittelbar auf dem Stirnende des Hülsenabschnitts aufliegende Flusskonzentratormantel Wärme ableitet und dementsprechend die Wärmedehnung des Stirnendes unzureichend sein kann. Die Folge ist, dass der Schaft des auszuspannenden Rotationswerkzeugs in dem Werkzeughalter klemmt und das Ausspannen erschwert ist.

Bei herkömmlichen Induktionsvorrichtungen wird die Induktionsspule relativ zu dem Werkzeughalter mittels des an dem Stirnende des Hülsenabschnitts aufliegenden Flusskonzentratormantels axial positioniert. Der Flusskonzentratormantel besteht üblicherweise aus sprödem Ferritmaterial, das bei unachtsamem Aufsetzen auf das Stirnende des Hülsenabschnitts splittern oder zerbrechen kann.

Es ist Aufgabe der Erfindung eine Vorrichtung zum induktiven Erwärmen eines Werkzeughalters zu schaffen, die besser als bisher für den Dauerbetrieb geeignet ist.

Die Erfindung geht aus von einer Vorrichtung zum induktiven Erwärmen eines eine zentrische Aufnahmeöffnung für einen Schaft eines Rotationswerkzeugs enthaltenden Hülsenabschnitt eines Werkzeughalters, der den in der Aufnahmeöffnung sitzenden Schaft des Werkzeugs im Presssitz hält und bei Erwärmung freigibt. Eine solche Vorrichtung umfasst eine Induktionsspulenanordnung mit wenigstens einer für die Erwärmung des Hülsenabschnitts mit elektrischem Strom periodisch wechselnder Stärke speisbare Induktionsspule und mit einer den magnetischen Fluss der Induktionsspule auf den Bereich des werkzeugseitigen Endes des Hülsenabschnitts konzentrierenden Flusskonzentratoranordnung aus einem magnetisierbaren, elektrisch im Wesentlichen nicht leitenden Material, wobei die Flusskonzentratoranordnung eine Auflagefläche aufweist, mit der sie in einer definierten Axialposition relativ zu dem Werkzeughalter an diesem im Bereich des werkzeugseitigen Endes des Hülsenabschnitts anlegbar ist.

Die vorstehend angegebene Aufgabe wird gemäß Anspruch 1 dadurch gelöst, dass die Flusskonzentratoranordnung ein die Anlagefläche bildendes Anlageelement aus einem elektrisch nicht leitenden, nicht magnetisierbarem Material umfasst. Vorteilhafte Ausführungen sind in den Unteransprüchen beschrieben.

Bei einer solchen Vorrichtung verläuft die Kontur der Flusskonzentratoranordnung im Bereich des für das Ein- und Ausschrumpfen des Werkzeugs aus dem Werkzeughalter relevanten, werkzeugseitigen Stirnende des Hülsenabschnitts vollständig im Abstand von diesem werkzeugseitigen Stirnende und ist durch das bevorzugt als thermische Isolierung wirkende Anlageelement gegen Wärmeleitung oder/und Wärmestrahlung geschützt. Auf diese Weise kann die Flusskonzentratoranordnung auch aus thermisch weniger belastbarem und damit kostengünstigerem Material hergestellt werden. Auch werden Klemmprobleme beim Ausspannen des Werkzeugschafts vermieden, da das Anlageelement den Wärmeabfluss im Bereich des werkzeugseitigen Endes des Hülsenabschnitts behindert. Da das Anlageelement nicht aus dem magnetisierbaren Material der Flusskonzentratoranordnung besteht, kann gezielt Material mit besseren mechanischen Eigenschaften eingesetzt werden. Das Anlageelement wirkt damit als mechanischer Schutzpuffer für das magnetisierbare Material der Flusskonzentratoranordnung. Überraschenderweise hat sich gezeigt, dass der Magnetfluss trotz des durch das Anlageelement bedingten Abstands zwischen dem werkzeugseitigen Ende des Hülsenabschnitts einerseits und der Flusskonzentratoranordnung andererseits hinreichend gezielt dem werkzeugseitigen Ende des Hülsenabschnitts zugeführt werden kann.

Das Anlageelement besteht bevorzugt aus Keramik, jedoch ist temperaturfester Kunststoff auch geeignet. Bevorzugt ist die Wärmeleitfähigkeit des Materials des Anlageelements geringer als die des magnetisierbaren Materials der Flusskonzentratoranordnung.

Von Vorteil ist ferner, dass das Anlageelement für die axiale Positionierung der Flusskonzentratoranordnung relativ zum Werkzeughalter ausgenutzt werden kann, was für die Reproduzierbarkeit des Schrumpfvorgangs von Bedeutung ist. Zweckmäßigerweise umfasst hierbei die Flusskonzentratoranordnung ein mit der Induktionsspule zu einer Einheit verbundenes Ringelement aus dem magnetisierbaren Material und ist über das Anlageelement an dem werkzeugseitigen Ende des Hülsenabschnitts des Werkzeughalters abstützbar. Das Anlageelement kann hierbei an der stirnseitigen Umfangskante oder auch gegebenenfalls an dem zumeist konischen Umfangsmantel des Hülsenabschnitts des Werkzeughalters abgestützt sein. Bevorzugt ist jedoch die Anlagefläche des Anlageelements an einer werkzeugseitigen, axialen Stirnfläche des Hülsenabschnitts des Werkzeughalters anlegbar.

Der Magnetfluss der Flusskonzentratoranordnung kann in dem Bereich des Stirnendes des Hülsenabschnitts des Werkzeughalters sowohl axial als auch radial eingeleitet werden. So kann die Flusskonzentratoranordnung mit einer Stirnfläche am axialen werkzeugseitigen Ende des Hülsenabschnitts radial überlappen, wobei sich das Anlageelement in den Überlappungsbereich zwischen der Flusskonzentratoranordnung und der Stirnfläche hinein erstreckt und mit seiner Anlagefläche an der Stirnfläche anliegt. Alternativ kann die Kontur der Flusskonzentratoranordnung im Bereich des werkzeugseitigen Endes des Hülsenabschnitts auch mit radialem Abstand zur Umfangsfläche des Hülsenabschnitts verlaufen, wobei auch hier das Anlageelement mit seiner Anlagefläche an einer Stirnfläche am axialen, werkzeugseitigen Ende des Hülsenabschnitts anliegt. In der letztgenannten Ausgestaltung steht das Anlageelement radial nach innen über den Innenumfang der Flusskonzentratoranordnung vor. Bei beiden Ausgestaltungen kann als Anlageelement eine einfache Ringscheibe genutzt werden.

Zweckmäßigerweise umfasst die Flusskonzentratoranordnung dem werkzeugseitigen Ende des Hülsenabschnitts benachbart ein Ringelement aus dem magnetisierbaren Material, welches mit dem Anlageelement zu einer Einheit verbunden ist. Dies erleichtert das Aufsetzen der zusammen mit der Flusskonzentratoranordnung eine Baueinheit bildenden Induktionsspule auf den Werkzeughalter. Das Ringelement einschließlich des Anlageelements sind bevorzugt betriebsmäßig auswechselbar mit der Induktionsspule verbunden, um die Induktionsspulen-Baueinheit auf einfache Weise an unterschiedlich große Werkzeughalter anpassen zu können. Die Einheit aus Ringelement und Anlageelement kann angeschraubt sein; einfacher handhabbar sind jedoch Riegelverbindungen, wie z.B. Bajonettverbindungen oder dergleichen. In einer Variante kann jedoch auch vorgesehen sein, dass das Anlageelement mit der Induktionsspule zu einer Einheit verbunden ist, während das aus magnetisierbarem Material bestehende Ringelement seinerseits betriebsmäßig auswechselbar an der Einheit, beispielsweise dem Anlageelement, befestigt ist.

Die Induktionsspule umschließt den Hülsenabschnitt des Werkzeughalters bevorzugt konzentrisch, wobei der den Magnetfluss der Induktionsspule auf dem Bereich des werkzeugseitigen Endes des Hülsenabschnitts konzentrierende Bereich der Flusskonzentratoranordnung als Ringelement, insbesondere Ringscheibe oder Ringhülse ausgebildet ist, welches mit dem werkzeugseitigen Ende des Hülsenabschnitts radial oder/und axial überlappt. Anordnungen dieser Art sind vergleichsweise einfach herzustellen. Es versteht sich, dass jedoch auch andere Induktionsspulentypen genutzt werden können, beispielsweise Anordnungen mit mehreren um den Hülsenabschnitt des Werkzeughalters herum angeordneten Teilspulen, deren Magnetfluss mittels der Flusskonzentratoranordnung an den Werkzeughalter herangeführt wird, wie sie beispielsweise in DE 202 03 784 U1 beschrieben sind. Es versteht sich ferner, dass die Ringelemente, soweit sie vorstehend erläutert wurden, nicht zwingend als geschlossene Ringe ausgebildet sein müssen, geeignet sind auch segmentierte Ringe.

Im Folgenden soll die Erfindung anhand einer Zeichnung näher erläutert werden. Hierbei zeigt:
Fig. 1 einen Axiallängsschnitt durch eine erfindungsgemäße Vorrichtung zum induktiven Erwärmen eines Werkzeughalters mit einem scheibenförmigen Polschuh am werkzeugseitigen Ende des Werkzeughalters;
Fig. 2 einen Axiallängsschnitt durch eine Variante der Vorrichtung nach Fig. 1;
Fig.3 einen Axiallängsschnitt durch eine andere erfindungsgemäße Vorrichtung zum induktiven Erwärmen eines Werkzeughalters mit einem Abschirmkragen am werkzeugseitigen Ende des Werkzeughalters und
Fig.4 einen Axiallängsschnitt durch eine Variante der Vorrichtung nach Fig. 3.

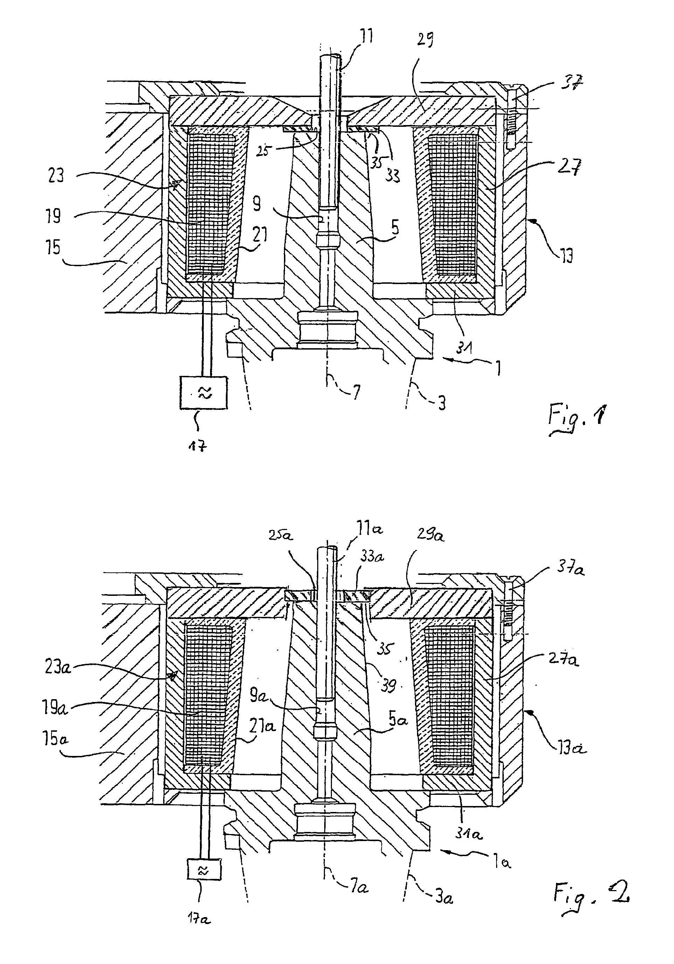

Fig. 1 zeigt einen hier einteiligen, gegebenenfalls aber auch mehrteiligen Werkzeughalter 1 aus einem zumindest elektrisch leitenden, hier aber auch magnetisierbaren Material, wie z.B. Stahl, der an seinem axial einen Ende ein Norm-Anschlussstück, wie z.B. einen Steilkegel 3, und an seinem axial anderen Ende einen Hülsenabschnitt 5 aufweist. Der Hülsenabschnitt 5 enthält zentrisch zur Drehachse 7 des Werkzeughalters 1 eine Aufnahmeöffnung 9 für einen mit seinem Schaft 11 in die Aufnahmeöffnung 9 in nachfolgend noch näher erläuterter Weise einsetzbares, ansonsten nicht näher dargestelltes Rotationswerkzeug, beispielsweise einen Bohrer, einen Fräser oder ein Reibwerkzeug. Der Außendurchmesser des Schafts 11 ist etwas größer als der freie Nenndurchmesser der Aufnahmeöffnung 9, so dass der Schaft 11 eingesetzt in den Hülsenabschnitt 5 für die Übertrag ung des Arbeitsdrehmoments im Presssitz gehalten ist.

Um den Werkzeugschaft 11 in den Werkzeughalter 1 einsetzen oder aus diesem entnehmen zu können, wird der Hülsenansatz 5 durch Erwärmen aufgeweitet. Die Erwärmung erfolgt mittels einer auf den Hülsenansatz 5 aufgesetzten und diesen mit radialem Abstand ihres Innendurchmessers vom Außenumfang des Hülsenabschnitts 5 konzentrisch umschließenden Induktionsspule 13, die mittels eines bei 15 angedeuteten Halters ei nes Induktionsschrumpfgeräts achsparallel zur Drehachse 7 verschiebbar gehalten und aus einem Stromgenerator 17 mit Wechselstrom oder gepulstem Gleichstrom einer Frequenz von beispielsweise 10 bis 50 kHz gespeist wird. Der von einer angenähert zylindrischen Wicklung 19 erzeugte Magnetfluss induziert in dem Hülsenabschnitt 5 Wirbelströme, die den Hülsenabschnitt 5 in relativ kurzer Zeit erwärmen und damit die Aufnahmeöffnung 9 zum Einschieben oder Herausziehen des Werkzeugschafts 11 hinreichend aufweiten.

Die Induktionsspule 13 hat innenliegend einen aus temperaturfestem Kunststoff oder Keramik bestehenden Spulenkörper 21, auf den die viellagige Wicklung 19 aufgebracht ist. Der Außenumfang und die dem Werkzeug axial abgewandte Stirnfläche der Wicklung 19 ist mit einer mehrteiligen Jochschale 23 aus einem magnetisierbaren, elektrisch nicht leitendem Material überdeckt, welches als Flusskonzentrator dient und den magnetischen Fluss im Umgebungsbereich der Wicklung 19 auf die Jochschale 23 konzentriert. Die Jochschale 23 kann aus ferromagnetischem Material oder magnetischen Verbundwerkstoffen auf Keramik- oder Kunststoffbasis, wie z.B. Ferrit, hergestellt sein.

Die mit der Jochschale 23 versehene Wicklung 19 erstreckt sich im Wesentlichen über die gesamte für die Aufnahme des Werkzeugschafts 11 bestimmte Länge der Aufnahmeöffnung 9 bzw. des Hülsenabschnitts 5. Mit ihrer der werkzeugseitigen Stirnfläche 25 des Hülsenabschnitts 5 benachbarten Stirnseite erstreckt sich die Wicklung 19 axial bis etwa auf die Höhe der Stirnseite 25 des Hülsenabschnitts 5.

Die Jochschale 23 umfasst den Außenmantel der Wicklung 19 mit einem hülsenförmigen Mantelabschnitt 27 an den sich ringscheibenförmige Polschuhe 29 bzw. 31 anschließen, die die axialen Stirnflächen der Wicklung 19 radial übergreifen. Der zur werkzeugseitigen Stirnfläche 25 des Hülsenansatzes 5 benachbarte Polschuh 29 erstreckt sich bis an den Hülsenabschnitt 5 heran und überlappt mit dessen Stirnfläche 25 radial. Axial zwischen der Stirnfläche 25 und dem Polschuh 29 ist im Überlappungsbereich ein ringscheibenförmiges Anlageelement 33 angeordnet, welches an dem Polschuh 29 befestigt ist und mit seiner dem Polschuh 29 axial abgewandten Fläche 35 an der Stirnfläche 25 des Hülsenabschnitts 5 aufliegt. Das Anlageelement 33 besteht aus Keramik oder einem temperaturfesten Kunststoff und hat schlechtere Wärmeleiteigenschaften als das Material des Polschuhs 29. Das Anlageelement 33 isoliert damit den Polschuh 29 thermisch gegenüber dem im Betrieb sich auf Temperaturen von mehreren 100°C erwärmenden Hülsenabschnitt 5.

Der Polschuh 29 leitet den Magnetfluss der Wicklung 19 im Bereich der Stirnfläche 25 in den Hülsenabschnitt 5. Um mit ein und derselben Wicklung 19 Werkzeughalter 1 mit unterschiedlichen Radialabmessungen erwärmen zu können, ist der Polschuh 29 einschließlich des daran gehaltenen, thermisch isolierenden Auflageelements 33 betriebsmäßig auswechselbar an der Induktionsspule 13 befestigt. Nach Lösen der Schrauben 37 kann der Polschuh 29 gewechselt werden. Es versteht sich, dass auch andere Befestigungsorgane genutzt werden können. Beispielsweise kann der Polschuh 29 mit einer Bajonettverriegelung an der Baueinheit befestigt sein.

Im Folgenden werden Varianten der anhand der Fig. 1 erläuterten Vorrichtung beschrieben. Gleichwirkende Komponenten sind mit den Bezugszahlen der Fig. 1 und zur Unterscheidung mit einem Buchstaben versehen. Zur Erläuterung des Aufbaus und der Wirkungsweise wird auf die vorangegangene Beschreibung Bezug genommen.

Im Ausführungsbeispiel der Fig.1 1 überlappt der zur werkzeugseitigen Stirnfläche 25 des Hülsenabschnitts 5 benachbarte Polschuh 29 des Jochmantels 23 die Stirnfläche 25 in radialer Richtung. In der Variante der Fig. 2 überlappt der zur werkzeugseitigen Stirnfläche 25a benachbarte Polschuh 29a des Jochmantels 23a den ringförmig konischen Umfangsmantel 39 des Hülsenabschnitts 5a zumindest über einen Teil seiner axialen Dicke in axialer Richtung. Auf diese Weise wird der von dem Polschuh 29a konzentrierte Magnetfluss ganz oder zumindest zum Teil am Umfang des Hülsenabschnitts 5a in diesen eingeleitet. Das wiederum ringscheibenförmige, thermisch isolierende, aus Keramik oder temperaturfestem Kunststoff bestehende Anlageelement 33a verlängert den Innenbereich des Polschuhs 29a nach radial innen und liegt mit seiner Anlagefläche 35 wiederum auf der Stirnfläche 25a des Hülsenabschnitts 5a für die Positionierung der Induktionsspule 13a auf.

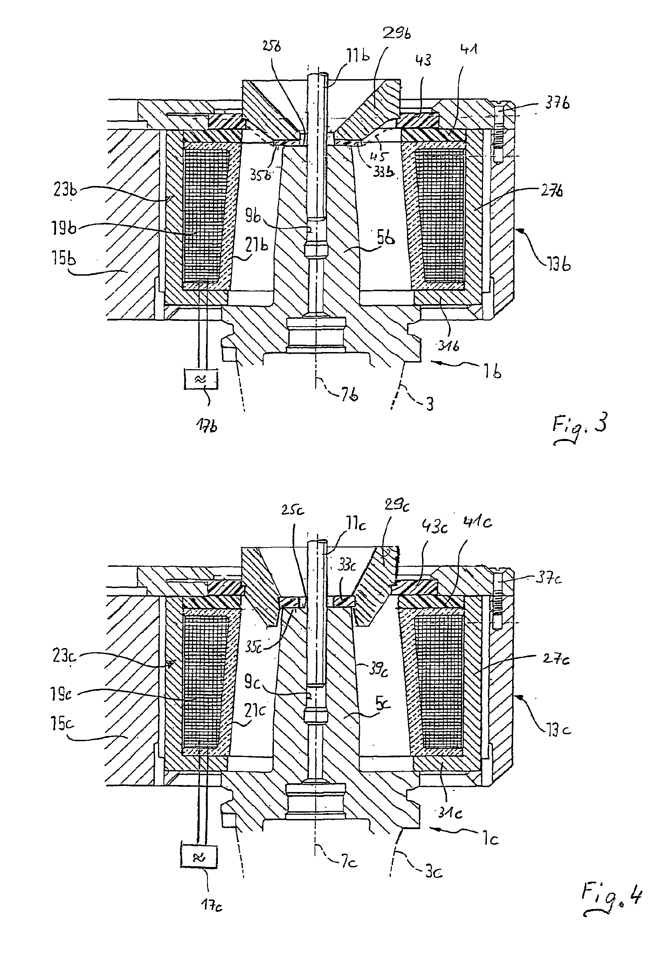

In der Ausführungsform der Fig. 3 ist der anhand der Fig. 1 und 2 erläuterte, ringscheibenförmige Polschuh durch einen angenähert konusschalenförmigen Abschirmkragen 29b ersetzt, der den magnetischen Fluss der auf dieser Seite etwas über die Wicklung 19b axial überstehenden Jochschale 23b optimal zur Stirnseite 25b des Hülsenabschnitts 5b lenkt und gleichzeitig den über den Hülsenabschnitt 5b vorstehenden Teil des Werkzeugschafts 11 b abschirmt und vor induktiver Erwärmung schützt. Der Abschirmkragen 29b verläuft allseitig im Abstand von der Jochschale 23b, die sich im dargestellten Ausführungsbeispiel nicht über die werkzeugseitige Stirnfläche der Wicklung 19b hinweg erstreckt, sondern lediglich etwas über diese Stirnfläche vorsteht. Die werkzeugseitige Stirnfläche der Wicklung 1 9b ist im dargestellten Ausführungsbeispiel mit einer aus nichtmagnetischem Material, z.B. temperaturenfesten Kunststoff oder Keramik bestehenden Abstandhalterscheibe 41 abgedeckt. In einer Variante kann diese mit ihrem Innenumfang wiederum im Abstand zum Abschirmkragen 29b endende Scheibe 41 gleichfalls aus dem magnetisierbaren Material der Jochschale 23 bestehen, also Bestandteil der Jochschale 23b sein. Einzelheiten eines derartigen Abschirmkragens sind beispielsweise in DE 101 02 710 A1 beschrieben.

Der Abschirmkragen 29b überlappt mit seinem im Durchmesser kleineren Ende die Stirnfläche 25b des Hülsenabschnitts 5b radial und liegt mit einem an dem Abschirmkragen 29b befestigten, ringscheibenförmigen Anlageelement 33b aus Keramik oder temperaturfestem Kunststoff an der Stirnfläche 25b an. Die Anlagefläche des Anlageelements 33b ist bei 35b angedeutet.

Der Abschirmkragen 29b ist seinerseits an einer temperaturfesten Scheibe 43 aus Keramik oder Kunststoff gehalten und zusammen mit dieser Scheibe 43 und dem Anlageelement 33b betriebsmäßig auswechselbar zur Anpassung an unterschiedliche Abmessungen des Werkzeughalter 1 b an der Induktionsspule 13b befestigt. Anstelle der Befestigungsschrauben 37b können auch hier wiederum andere Verriegelungsorgane vorgesehen sein, beispielsweise in Form einer Bajonettverbindung. Es versteht sich auch, dass die Scheibe 43 betriebsmäßig fest mit der Induktionsspule 13b verbunden sein kann, so dass lediglich der Abschirmkragen 29b einschließlich des Anlageelements 33b betriebsmäßig ausgetauscht werden kann. In der Ausgestaltung der Fig.3 ist das Abstandelement 33b an dem Abschirmkragen 29b befestigt, beispielsweise angeklebt. Bei 45 ist angedeutet, dass das Anlageelement 33b auch mit der Scheibe 43 zu einer Einheit verbunden sein kann, beispielsweise mit dieser Scheibe integral ausgeführt sein kann, so dass ein die Befestigung des Abschirmkragens 29b erleichternder, muldenförmiger Sitz entsteht.

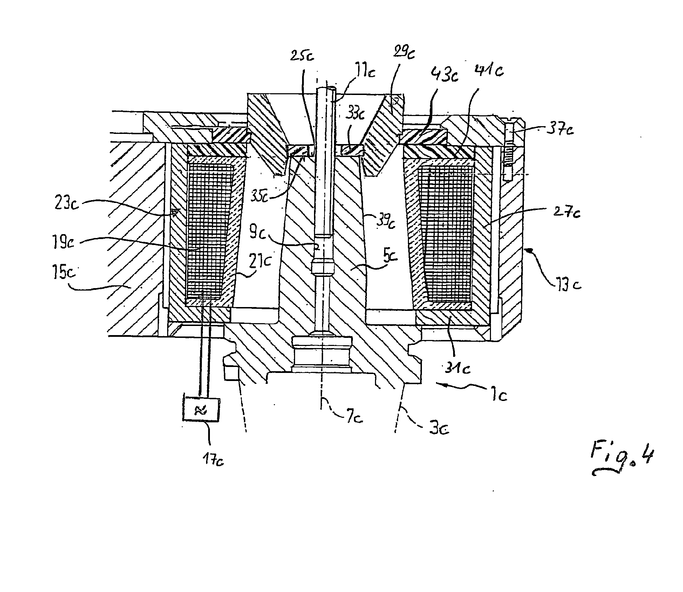

Fig.4 zeigt eine Variante der Vorrichtung aus Fig. 3. Ähnlich der Variante der Fig.2 überlappt der Abschirmkragen 29c den konusförmigen Außenmantel 39c des Hülsenabschnitts 5c in einem an die Stirnfläche 25c des Hülsenabschnitts 5c unmittelbar angrenzenden Bereich in radialer Richtung. Der Abschirmkragen 29c leitet den in Verbindung mit dem Jochmantel 23c konzentrierten Magnetfluss radial in den Endbereich des Hülsenabschnitts 5 ein. Auch hier überlappt der Abschirmkragen 29c die werkzeugseitige Stirnfläche der Wicklung 19c nicht. An dem Innen umfang des Abschirmkragens 29c ist wiederum ein ringscheibenförmiges Anlageelement 33c befestigt. Das Anlageelement 33c besteht aus Keramik oder temperaturfestem Kunststoff und liegt mit seiner Anlagefläche 35c an der Stirnfläche 25c des Hülsenabschnitts 5c an. Das Element 33c positioniert einerseits die Induktionsspule 13c relativ zum Werkzeughalter 1c und isoliert den Abschirmkragen 29c thermisch gegenüber dem im Betrieb sich erwärmenden Hülsenabschnitt 5c. Auch hier ist der Abschirmkragen 29c betriebsmäßig auswechselbar, wie dies anhand der Fig. 3 erläutert wurde.

## Patentansprüche

1. Vorrichtung zum induktiven Erwärmen eines eine zentrische Aufnahmeöffnung (9) für einen Schaft (11) eines Rotationswerkzeugs enthaltenden Hülsenabschnitt (5) eines Werkzeughalters (1), der den in der Aufnahmeöffnung (9) sitzenden Schaft (11) des Werkzeugs (1) im Presssitz hält und bei Erwärmung freigibt, umfassend:
eine Induktionsspulenanordnung (13) mit wenigstens einer für die Erwärmung des Hülsenabschnitts (5) mit elektrischem Strom periodisch wechselnde Stärke speisbaren Induktionsspule (19) und mit einer den magnetischen Fluss der Induktionsspule (19) auf den Bereich des werkzeugseitigen Endes des Hülsenabschnitts (5) konzentrierenden Flusskonzentratoranordnung (23) aus einem magnetisierbaren, elektrisch im Wesentlichen nicht leitenden Material, wobei die Flusskonzentratoranordnung (23) eine Anlagefläche (35) aufweist, mit der sie in einer definierten Axialposition relativ zu dem Werkzeughalter (1) an diesem im Bereich des werkzeugseitigen Endes des Hülsenabschnitts (5) anlegbar ist,
**dadurch gekennzeichnet, dass** die Flusskonzentratoranordnung (23) ein die Anlagefläche (35) bildendes Anlageelement (33) aus einem elektrisch nicht leitenden, nicht magnetisierbaren Material trägt.

2. Vorrichtung nach Anspruch 1,
**dadurch gekennzeichnet, dass** die Flusskonzentratoranordnung (23) ein mit der Induktionsspule (19) zu einer Einheit verbundenes Ringelement (29) aus dem magnetisierbaren Material umfasst und über das Anlageelement (33) an dem werkzeugseitigen Ende des Hülsenabschnitts (5) des Werkzeughalters (1) abstützbar ist.

3. Vorrichtung nach Anspruch 2,
**dadurch gekennzeichnet, dass** die Anlagefläche (35) des Anlageelements (33) an eine werkzeugseitige Stirnfläche (25) des Hülsenabschnitts (5) des Werkzeughalters (1) anlegbar ist.

4. Vorrichtung nach Anspruch 1 bis 3,
**dadurch gekennzeichnet, dass** die Flusskonzentratoranordnung (23) eine Stirnfläche (25) am axialen werkzeugseitigen Ende des Hülsenabschnitts (5) des Werkzeughalters (1) radial überlappt und sich das Anlageelement (33) in den Überlappungsbereich zwischen der Flusskonzentratoranordnung (23) und der Stirnfläche (25) hinein erstreckt und mit seiner Anlagefläche (35) an der Stirnfläche (25) anliegt.

5. Vorrichtung nach einem der Ansprüche 1 bis 3,
**dadurch gekennzeichnet, dass** die Kontur der Flusskonzentratoranordnung (23a; 23c) im Bereich des werkzeugseitigen Endes des Hülsenabschnitts (5a; 5c) des Werkzeughalters (1 a; 1c) mit radialem Abstand zur Umfangsfläche (39; 39c) des Hülsenabschnitts (5a; 5c) verläuft, und dass das Anlageelement (33a; 33c) mit seiner Anlagefläche (35a; 35c) an einer Stirnfläche (25a; 25c) am axialen werkzeugseitigen Ende des Hülsenabschnitts (5a; 5c) anliegt.

6. Vorrichtung nach Anspruch 4 oder 5,
**dadurch gekennzeichnet, dass** das Anlageelement (33) als Ringscheibe ausgebildet ist.

7. Vorrichtung nach einem der Ansprüche 4 bis 6,
**dadurch gekennzeichnet, dass** die Flusskonzentratoranordnung (23) dem werkzeugseitigen Ende des Hülsenabschnitts (5) benachbart ein Ringelement (29) aus dem magnetisierbaren Material umfasst, welches mit dem Anlageelement (33) zu einer Einheit verbunden ist.

8. Vorrichtung nach Anspruch 7,
**dadurch gekennzeichnet, dass** das Ringelement (29) einschließlich des Anlageelements (33) betriebsmäßig auswechselbar mit der Induktionsspule (19) verbunden ist.

9. Vorrichtung nach Anspruch 7,
**dadurch gekennzeichnet, dass** das Anlageelement (33) mit der Induktionsspule (19) zu einer Einheit verbunden ist und das Ringelement (29) betriebsmäßig auswech selbar an der Einheit gehalten ist.

10. Vorrichtung nach einem der Ansprüche 1 bis 9,
**dadurch gekennzeichnet, dass** die Induktionsspule (19) den Hülsenabschnitt (5) konzentrisch umschließt und dass der den Magnetfluss der Induktionsspule (19) auf den Bereich des werkzeugseitigen Endes des Hülsenabschnitts (5) konzentrierende Bereich der Flusskonzentratoranordnung (23) als Ringelement (29), insbesondere Ringscheibe oder Ringhülse, ausgebildet ist, welches mit dem werkzeugseitigen Ende des Hülsen abschnitts (5) radial oder/und axial überlappt.

11. Vorrichtung nach Anspruch 10,
**dadurch gekennzeichnet, dass** das Ringelement (29) in Umfangsrichtung segmentiert ist.

12. Vorrichtung nach einem der Ansprüche 1 bis 11,
**dadurch gekennzeichnet, dass** das Anlageelement (33) aus Kunststoff oder Keramik besteht.

13. Vorrichtung nach einem der Ansprüche 1 bis 12,
**dadurch gekennzeichnet, dass** das Anlageelement (33) aus thermisch isolierendem Material besteht, insbesondere einem Material, dessen Wärmeleitfähigkeit geringer ist als die des magnetisierbaren Materials der Flusskonzentratoranordnung (23).

## Claims

1. Device for inductively heating a sleeve section (5) of a tool holder (1) containing a central mounting opening (9) for a shaft (11) of a rotary tool, which tool holder holds the shaft (11) of the tool (1) sitting in the mounting opening (9) in a press-fit and releases it upon heating, comprising: an induction coil arrangement (13) with at least one induction coil (19) feeding electric current of periodically alternating strength for heating the sleeve section (5) and with a flux-concentrating arrangement (23), made from a magnetisable material that is essentially non-conducting, which concentrates the magnetic flux of the induction coil (19) onto the section of the tool-side end of the sleeve section (5), whereby the flux-concentrating arrangement (23) comprises a bearing surface (35), with which in a defined axial position relative to the tool holder (1) it can be placed against the latter in the region of the tool-side end of the sleeve section (5), **characterised in that** the flux-concentrating arrangement (23) supports a bearing element (33) forming the bearing surface (35) which is made from a non-electricity conducting, non-magnetisable material.

2. Device according to claim 1, **characterised in that** the flux-concentrating arrangement (23) comprises an annular element (29) made from magnetisable material which is connected to the induction coil (19) to form a unit and can be supported by the bearing element (33) on the tool-side end of the sleeve section (5) of the tool holder (1).

3. Device according to claim 2, **characterised in that** the bearing surface (35) of the bearing element (33) can be placed on a tool-side end face (25) of the sleeve section (5) of the tool holder (1).

4. Device according to claim 1 to 3, **characterised in that** the flux-concentrating arrangement (23) radially overlaps an end face (25) on the axial tool-side end of the sleeve section (5) of the tool holder (1), and the bearing element (33) extends into the overlapping area between the flux-concentrating arrangement (23) and the end face (23) and with its bearing surface (35) bears against the end face (25).

5. Device according to one of claims 1 to 3, **characterised in that** the contour of the flux-concentrating arrangement (23a; 23c) in the region of the tool-side end of the sleeve section (5a; 5c) of the tool holder (1a; 1c) runs at a radial distance from the peripheral surface (39; 39c) of the sleeve section (5a; 5c), and **in that** the bearing element (33a; 33c) with its bearing surface (35a; 35c) bears against an end face (25a; 25c) on the axial tool-side end of the sleeve section (5a; 5c).

6. Device according to claim 4 or 5, **characterised in that** the bearing element (33) is designed in the form of an annular disc.

7. Device according to one of claims 4 to 6, **characterised in that** the flux-concentrating arrangement (23) adjacent to the tool-side end of the sleeve section (5) comprises an annular element (29) made from a magnetisable material, which is connected with the bearing element (33) to form a unit.

8. Device according to claim 7, **characterised in that** the annular element (29) including the bearing element (33) is connected to the induction coil (19) in a replaceable manner in operation.

9. Device according to claim 7, **characterised in that** the bearing element (33) is connected with the induction coil (19) to form a unit, and the annular element (29) is held on the unit in a replaceable manner in operation.

10. Device according to one of claims 1 to 9, **characterised in that** the induction coil (19) surrounds the sleeve section (5) concentrically, and **in that** the region of the flux-concentrating arrangement (23) concentrating the magnetic flux of the induction coil (19) onto the region of the tool-side end of the sleeve section (5) is designed in the form of an annular element (29), in particular an annular disc or annular sleeve, which overlaps radially and/or axially with the tool-side end of the sleeve section (5).

11. Device according to claim 10, **characterised in that** the annular element (29) is segmented in circumferential direction.

12. Device according to one of claims 1 to 11, **characterised in that** the bearing element (33) is made of plastic or ceramics.

13. Device according to one of claims 1 to 12, **characterised in that** the bearing element (33) is made from a thermal-insulating material, in particular a material with lower thermal conductivity than that of the magnetisable material of the flux-concentrating arrangement (23).

## Revendications

1. Dispositif pour le chauffage inductif d'un tronçon de manchon (5), qui contient une ouverture de réception centrale (9) pour une tige (11) d'un outil rotatif, d'un porte-outil (1), ledit tronçon de manchon retenant en ajustement pressé la tige (11) de l'outil (1) disposée dans l'ouverture de réception (9) et la libérant lors d'un échauffement, comprenant :
un agencement à bobine inductive (13) comprenant au moins une bobine inductive (19) susceptible d'être alimentée, pour le chauffage du tronçon de manchon (5), avec un courant électrique d'intensité périodiquement variable, et comprenant un agencement concentrateur de flux (23), qui concentre le flux magnétique de la bobine inductive (19) sur la zone de l'extrémité du tronçon de manchon (5), en un matériau susceptible d'être aimanté mais sensiblement non conducteur de l'électricité, et l'agencement concentrateur de flux (23) comporte une surface d'appui (35) avec laquelle il peut être appuyé contre le porte-outil (1) dans une position axiale définie par rapport à celui-ci, dans la zone de l'extrémité côté outil du tronçon de manchon (5),
**caractérisé en ce que** l'agencement concentrateur de flux (23) porte un élément d'appui (33) qui forme la surface d'appui (35), en un matériau non conducteur de l'électricité et non susceptible d'être aimanté.

2. Dispositif selon la revendication 1,
**caractérisé en ce que** l'agencement concentrateur de flux (23) comprend un élément annulaire (29), en matériau susceptible d'être aimanté, relié à la bobine inductive (19) pour former une unité, et est susceptible d'être soutenu via l'élément d'appui (33) sur l'extrémité côté outil du tronçon de manchon (5) du porte-outil (1).

3. Dispositif selon la revendication 2,
**caractérisé en ce que** la surface d'appui (35) de l'élément d'appui (33) peut être appuyé contre une surface frontale (25), côté outil, du tronçon de manchon (5) du porte-outil (1).

4. Dispositif selon la revendication 1 à 3,
**caractérisé en ce que** l'agencement concentrateur de flux (23) chevauche radialement une surface frontale (25) à l'extrémité axiale, côté outil, du tronçon de manchon (5) du porte-outil (1), et l'élément d'appui (33) s'étend jusque dans la zone de chevauchement entre l'agencement concentrateur de flux (23) et la surface frontale (25) et s'appuie par sa surface d'appui (35) contre la surface frontale (25).

5. Dispositif selon l'une des revendications 1 à 3,
**caractérisé en ce que** le contour de l'agencement concentrateur de flux (23a, 23c) dans la zone de l'extrémité côté outil du tronçon de manchon (5a; 5c) du porte-outil (1a ; 1c) s'étend à distance radiale de la surface périphérique (39 ; 39c) du tronçon de manchon (5a ; 5c), et **en ce que** l'élément d'appui (33a ; 33c) s'appuie avec sa surface d'appui (35a ; 35c) sur une surface frontale (25a ; 25c) à l'extrémité côté outil du tronçon de manchon (5a ; 5c).

6. Dispositif selon la revendication 4 ou 5,
**caractérisé en ce que** l'élément d'appui (33) est réalisé sous forme de disque annulaire.

7. Dispositif selon l'une des revendications 4 à 6,
**caractérisé en ce que** l'agencement concentrateur de flux (23) comprend, au voisinage de l'extrémité côté outil du tronçon de manchon (5), un élément annulaire (29) en matériau susceptible d'être aimanté, qui est relié à l'élément d'appui (33) pour former une unité.

8. Dispositif selon la revendication 7,
**caractérisé en ce que** l'élément annulaire (29), y compris l'élément d'appui (33), est relié à la bobine inductive (19) de façon interchangeable en service.

9. Dispositif selon la revendication 7,
**caractérisé en ce que** l'élément d'appui (33) est relié à la bobine inductive (19) pour former une unité, et l'élément annulaire (29) est maintenu sur l'unité de façon interchangeable en service.

10. Dispositif selon l'une des revendications 1 à 9,
**caractérisé en ce que** la bobine inductive (19) entoure le tronçon de manchon (5) de manière concentrique, et **en ce que** la zone de l'agencement concentrateur de flux (23) qui concentre le flux magnétique de la bobine inductive (19) sur la zone de l'extrémité côté outil du tronçon de manchon (5) est réalisée sous forme d'un élément annulaire (29), en particulier d'un disque annulaire ou d'une douille annulaire, qui chevauche radialement et/ou axialement l'extrémité côté outil du tronçon de manchon (5)

11. Dispositif selon la revendication 10,
**caractérisé en ce que** l'élément annulaire (29) est segmenté en direction périphérique.

12. Dispositif selon l'une des revendications 1 à 11,
**caractérisé en ce que** l'élément d'appui (33) est en matière plastique ou en céramique.

13. Dispositif selon l'une des revendications 1 à 12,
**caractérisé en ce que** l'élément d'appui (33) est en un matériau thermiquement isolant, en particulier en un matériau dont la conductivité thermique est inférieure à celle du matériau, susceptible d'être aimanté, de l'agencement concentrateur de flux (23).
